# EUROPÄISCHE PATENTSCHRIFT

(11) **EP 1 597 643 B1**
(45) Veröffentlichungstag und Bekanntmachung des Hinweises auf die Patenterteilung: **17.06.2009**
(21) Anmeldenummer: 04701906.2
(22) Anmeldetag: 14.01.2004
(51) Int. Cl.: G05B 23/02

(54) **VORRICHTUNG UND VERFAHREN ZUR MODELLBASIERTEN ON-BOARD-DIAGNOSE**
DEVICE AND METHOD FOR ON-BOARD DIAGNOSIS BASED ON A MODEL
DISPOSITIF ET PROCEDE DE DIAGNOSTIC EMBARQUE BASE SUR UN MODELE

(30) Priorität: 21.02.2003 DE 10307342
(43) Veröffentlichungstag der Anmeldung: 23.11.2005
(73) Patentinhaber: AUDI AG, 85045 Ingolstadt (DE)
(72) Erfinder: SIEBEL, Ulrich, 13465 Berlin (DE); HENECKER, Frank, 85119 Ernsgaden (DE); BREUER, Andreas, 29356 Bröckel (DE)
(74) Vertreter: Patzelt, Heike Anna Maria
(86) Internationale Anmeldenummer: PCT/EP2004/000189
(87) Internationale Veröffentlichungsnummer: WO 2004/074955

(56) Entgegenhaltungen:
- DE-A- 10 051 781
- DE-A- 10 056 413
- US-A- 5 957 985
- US-B1- 6 246 950

## Beschreibung

Die vorliegende Erfindung betrifft eine Vorrichtung zur On-Board-Diagnose insbesondere für ein Kraftfahrzeugsystem, das mehrere, miteinander vernetzte, funktionale Komponenten, von denen mindestens zwei Steuergeräte sind, aufweist. Ferner betrifft die vorliegende Erfindung ein entsprechendes Verfahren zur On-Board-Diagnose eines Systems. Eine derartige On-Board-Diagnose kann in Kraftfahrzeugen, spurgeführten Fahrzeugen, Schiffen, Flugzeugen und dergleichen durchgeführt werden. Nachfolgend wird hierfür der allgemeine Begriff "Fahrzeug" verwendet.

Die Fehlerdiagnose von Steuergeräten und den damit gesteuerten Komponenten insbesondere eines Kraftfahrzeugs wird üblicherweise mittels Eigendiagnose durch das Steuergerät selbst durchgeführt. Dies bedeutet, dass die Diagnose nur auf das Steuergerät mit den jeweils gesteuerten Komponenten beschränkt ist. Falls durch die Eigendiagnose ein Fehler ermittelt wird, wird eine Fehlermeldung in dem Steuergerät abgespeichert. In einer Werkstatt wird dann mit Hilfe eines Werkstatttesters die Fehlermeldung abgerufen. Da die Eigendiagnose nur jeweils ein Steuergerät beziehungsweise dessen gesteuerte Komponenten betrifft, können damit keine komponenten- beziehungsweise systemübergreifenden Fehler detektiert werden. Da jedoch immer mehr Steuergeräte in Kraftfahrzeugen verbaut werden, die gegebenenfalls miteinander vernetzt sind, ist es zunehmend von Bedeutung, auch eine Fehlerdiagnose in diesen vernetzten Systemen vornehmen zu können.

Die Schwierigkeit einer systemübergreifenden Fehlerdiagnose besteht darin, dass die Steuergeräte und gesteuerten Komponenten in der Regel von verschiedenen Herstellern stammen, und daher unterschiedliche Realisierungen beziehungsweise Interpretationen von Spezifikationen erfolgen können.

Aus dem US-Patent 5,957,985 ist ein Automobilsteuersystem bekannt, bei dem eine erste Gruppe von Steuereinheiten, wie beispielsweise für den Motor oder das Antiblockiersystem eines Kraftfahrzeugs, an einen ersten Bus angeschlossen sind, und bei dem eine zweite Gruppe von Steuereinheiten, beispielsweise für die Klimaanlage, das Navigationssystem oder das Radio, an einem zweiten Bus angeschlossen sind. Zusätzlich ist am ersten Bus eine Mastersteuereinheit angeschlossen. Den ersten Bus verbindet eine Slavesteuereinheit mit dem zweiten Bus. Die Mastersteuereinheit sammelt Daten betreffend mögliche Fehler der einzelnen Steuereinheiten. Den Fehlern werden Prioritäten zugeordnet, so dass beim Auftreten von mehreren voneinander unabhängigen Fehlern kein Konflikt auftritt.

Ein systemübergreifendes Diagnoseverfahren ist aus der deutschen Offenlegungsschrift DE 100 51 781 A1 bekannt. Dort erfolgt die Diagnose in zwei Stufen, nämlich einer Komponentendiagnose und einer zentralen Systemdiagnose, wobei von der Komponentendiagnose eine Systemgröße und ein der Systemgröße zugeordneter Zustand als Ergebnis an die zentrale Systemdiagnose ausgegeben werden. Sogenannte Modelldaten der Komponenten und des Systems werden in einer Funktions-Matrix gespeichert. Die Verknüpfung der Zustände der Systemgrößen mit Funktionszuständen und die Bestimmung fehlerhafter Funktionen erfolgt mit Hilfe eines Funktions-Matrix-Tensors. Nachteilig dabei ist, dass die sehr umfangreiche Funktions-Matrix, die sämtliche funktionalen Zusammenhänge der Einzelkomponenten berücksichtigen müsste, in einem entsprechenden Diagnosegerät abgespeichert werden muss.

Die Aufgabe der vorliegenden Erfindung besteht somit darin, ein vereinfachtes On-Board-Diagnoseverfahren sowie eine entsprechende vereinfachte On-Board-Diagnosevorrichtung vorzuschlagen.

Erfindungsgemäß wird diese Aufgabe gelöst durch eine Vorrichtung zur On-Board-Diagnose eines Fahrzeugsystems, insbesondere eines Kraftfahrzeugsystems, das mehrere, miteinander vernetzte, funktionale Komponenten von denen mindestens zwei Steuergeräte sind, aufweist, mit einer Recheneinrichtung, die über eine Anschlusseinrichtung mit den mehreren funktionalen Komponenten verbindbar ist, zur Aufnahme und Auswertung von Komponentendaten der mehreren Komponenten, wobei die Recheneinrichtung über ein mathematisches Modell verfügt, mit dem funktionale Zusammenhänge der mehreren Komponenten optional einschließlich der Anschlusseinrichtung berechenbar sind, so dass aus den Komponentendaten komponentenübergreifende Fehler und/oder Fehler betreffend die Anschlusseinrichtung zielgerichtet im Fahrzeug ermittelbar sind.

Ferner ist erfindungsgemäß vorgesehen ein Verfahren zur On-Board-Diagnose eines Fahrzeugsystems, insbesondere eines Kraftfahrzeugsystems, das mehrere, miteinander vernetzte, funktionale Komponenten aufweist, durch Aufnehmen und Auswertung von Komponentendaten der mehreren Komponenten, wobei zum Auswerten der Komponentendaten ein mathematisches Modell verwendet wird, mit dem funktionelle Zusammenhänge der mehreren Komponenten optional einschließlich einer Anschlusseinrichtung zur Vernetzung der Komponenten berechnet werden, so dass aus den Komponentendaten komponentenübergreifende Fehler und/oder Fehler betreffend die Anschlusseinrichtung zielgerichtet im Fahrzeug ermittelbar sind.

Die modellbasierte Fehlerdiagnose hat den Vorteil, dass keine übermäßig großen Datenbanken in einzelnen Diagnose- oder Steuergeräten abgelegt werden müssen.

Des Weiteren können durch das modellbasierte Verfahren auch sogenannte unbekannte Fehlerursachen detektiert werden. Dabei handelt es sich um Fehlerursachen, die mit den bekannten Fehlercodes nicht abgedeckt sind. Diese Fehlerursachen lassen sich durch die im Modell hinterlegten Funktionsabhängigkeiten ermitteln. Dabei kann beispielsweise durch Schnittmengenbildung mehrerer Fehlersymptome beziehungsweise Wirkungszusammenhänge auf defekte Komponenten geschlossen werden.

In vorteilhafter Weise wird durch die On-Board-Diagnosevorrichtung die übergreifende Fehlerdiagnose für sämtliche Komponenten einschließlich der Anschlusseinrichtung zentral durchgeführt. Dadurch können sämtliche komponenten- beziehungsweise systemübergreifenden Fehler beziehungsweise Fehlerursachen erkannt werden. Außerdem können durch die modellbasierte Fehlerdiagnose somit auch Mehrfachfehler erkannt werden, die durch mehrere Einzelfehler verursacht und von einem Anwender nicht ohne weiteres zu ermitteln sind. Darüber hinaus können durch die modellbasierte, zentrale Diagnose auch sogenannte Meldeschauer zielführend verarbeitet beziehungsweise verhindert werden, die durch einen einzigen Fehler verursacht werden und sich beispielsweise auf mehrere Steuergeräte auswirken und entsprechend viele Fehlermeldungen hervorrufen.

Entsprechend einer erfindungsgemäßen Variante umfassen die Komponentendaten der mehreren Komponenten hinsichtlich einer Fehlerdiagnose unverarbeitete Zustandsdaten. Bei einer alternativen Variante umfassen die Komponentendaten hinsichtlich der Fehlerdiagnose vorverarbeitete Zustandsdaten und/oder Fehlerdaten, wobei in den einzelnen Komponenten bereits Eigendiagnosen oder Vorstufen von Eigendiagnosen durchgeführt werden.

Die erfindungsgemäße On-Board-Diagnosevorrichtung kann auch über eine Funktionseinrichtung zur Durchführung von Fahrzeugfunktionen verfügen. Damit stellt sie eine Einheit dar, die sowohl Funktions- als auch Diagnosevorrichtung ist. So können mit einer funktionalen Einheit auch komponentenbeziehungsweise systemübergreifende Diagnosen durchgeführt werden.

Vorzugsweise besteht ein Fahrzeugsystem aus mehreren funktionalen Komponenten, die miteinander vernetzt sind, und mindestens einer modellbasierten Diagnosevorrichtung. Falls mehrere der Komponenten einschließlich der Anschlusseinrichtung jeweils eine Diagnoseeinheit besitzen, so kann eine oder mehrere dieser Komponenten eine Diagnosemasterfunktion übernehmen, um Diagnosedaten von anderen Komponenten oder eigene Diagnosedaten zu verwalten beziehungsweise auszuwerten. Die durch diese Diagnosemasterfunktion gewonnenen Daten können an eine weitrführende Systemdiagnose geleitet werden.

Die vorliegende Erfindung wird nun anhand der beigefügten Zeichnungen näher erläutert, in denen zeigen:
- Figur 1: ein Blockschaltbild eines Kraftfahrzeugsystems gemäß einer ersten Ausführungsform der vorliegenden Erfindung; und
- Figur 2: ein Blockschaltbild eines Kraftfahrzeugsystems gemäß einer zweiten Ausführungsform der vorliegenden Erfindung.

Die nachfolgend näher dargestellten Ausführungsformen stellen bevorzugte Ausführungsbeispiele der vorliegenden Erfindung dar.

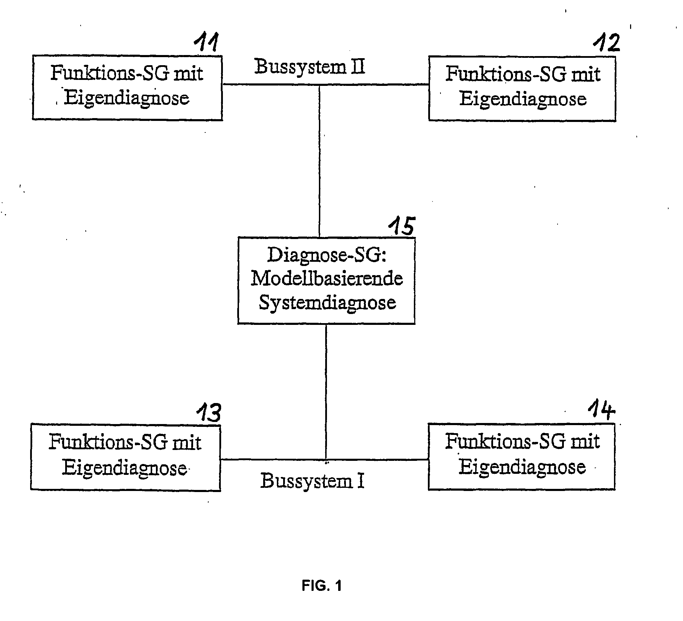

Figur 1 gibt ein Blockschaltdiagramm eines vereinfachten Kraftfahrzeugsystems wieder. Das Kraftfahrzeugsystem umfasst vier Funktionssteuergeräte 11, 12, 13 und 14 sowie ein Diagnosesteuergerät 15. Die Funktionssteuergeräte 11 und 12 sind über ein Bussystem II an das Diagnosesteuergerät 15 angeschlossen. Die Funktionssteuergeräte 13 und 14 sind hingegen über ein Bussystem I mit dem Diagnosesteuergerät 15 verbunden.

Die Funktionssteuergeräte 11 bis 14 besitzen jeweils eine Eigendiagnosefunktion. Die durch die Eigendiagnose erhaltenen Fehlermeldungen der einzelnen Funktionssteuergeräte 11 bis 14 werden gegebenenfalls mit weiteren, abgespeicherten Prozessdaten über das jeweiligen Bussystem I, II zum Diagnosesteuergerät 15 geliefert. In diesem eigens vorgesehenen Steuergerät 15 läuft zentral ein systemübergreifendes Modell zur Detektierung von Systemfehlerkandidaten. Bei dieser Ausführungsform wird also auf die herkömmliche Eigendiagnose eine systemübergreifende, modellbasierte Diagnose gesetzt, so dass ein hierarchisches Diagnosesystem entsteht.

Da nicht jede Fehlfunktion durch Eigendiagnose erkannt werden kann, werden auch Prozessdaten von den Funktionssteuergeräten 11 bis 14 zum Diägnosesteuergerät 15 gesandt. Aus einer Vielzahl von Prozessdaten und Fehlermeldungen kann das Diagnosesteuergerät 15 zentral anhand des Modells beurteilen, welche Fehlerursache den Daten zugrunde liegt, oder zumindest eine Fehlereingrenzung vornehmen. So kann beispielsweise durch Eigendiagnose des Motorsteuergeräts festgestellt werden, dass der Motor stottert und eine entsprechende Fehlermeldung abgesetzt werden. Erhält das Diagnosesteuergerät 15 zusätzlich auch Prozessdaten darüber, dass das Motorstottern gleichzeitig mit dem Zugeben von Gas auftritt, so führt die gemeinsame Verarbeitung der Fehlermeldung und der Prozessdaten dann wesentlich zielgerichteter zur entsprechenden Fehlerursache.

In das Diagnosesteuergerät 15 ist eine sogenannte Diagnosemaschine integriert. Mit Hilfe dieser Diagnosemaschine, die nach dem Prinzip der "general diagnostic engine" nach de Kleer beziehungsweise darauf basierenden Weiterentwicklungen arbeitet und in der ein fahrzeugspezifisches Fehlerdiagnosemodell geladen ist, werden die Fehlercodes beziehungsweise Symptome analysiert. Dabei werden mögliche Fehlerkandidaten ermittelt.

Die Bussysteme I und II können die üblichen Bordnetzwerke darstellen. Als Alternative kann auch ein eigenes Diagnosenetzwerk im Kraftfahrzeug verschaltet sein, so dass die einzelnen Funktionssteuergeräte sowohl einen Anschluss an einen üblichen Kraftfahrzeugbus als auch einen Anschluss an einen Diagnosebus besitzen. Auch diese Bussysteme sind in dem Diagnosesteuergerät 15 modelliert, so dass auch die jeweiligen Busfehler erkannt werden können.

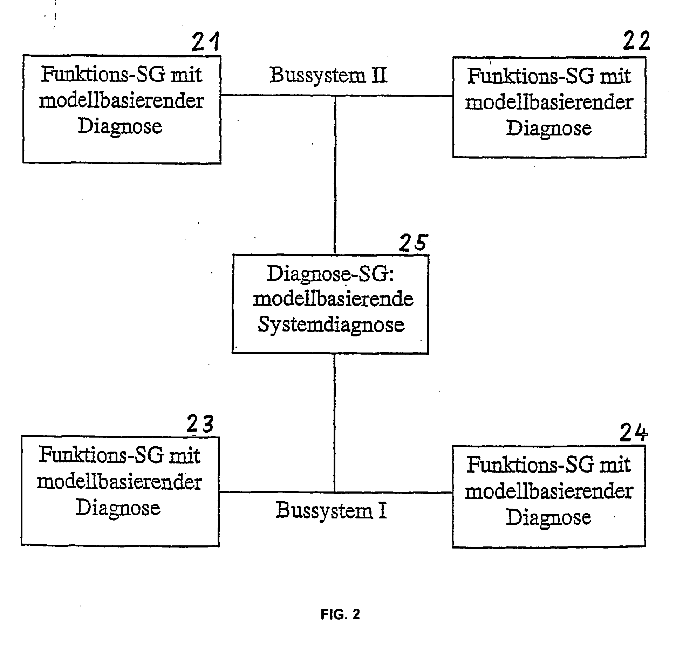

Ein Kraftfahrzeugsystem gemäß einer zweiten Ausführungsform der vorliegenden Erfindung ist in Figur 2 dargestellt. Die Struktur des Systems entspricht im Wesentlichen der der Ausführungsform von Figur 1. Das Diagnosesteuergerät 25 ist mit dem Diagnosesteuergerät 15 identisch. Die Funktionssteuergeräte 21 bis 24 verfügen im vorliegenden Fall jedoch über eine modellbasierte Eigendiagnose. Dies bedeutet, dass dieses System hierarchisch modellbasiert ist. In den einzelnen Komponenten beziehungsweise Funktionssteuergeräten 21 bis 24 sind Komponentenmodelle für die Eigendiagnose hinterlegt, während in dem Diagnosesteuergerät 25 ein Fehlermodell zur systemübergreifenden Diagnose eingesetzt wird. Mit anderen Worten, auf der Steuergerätebene läuft eine modellbasierte Diagnose in jeden Steuergerät, mit der die lokalen Fehler im Steuergerät und in ihrer Peripherie detektiert werden können. Um Systemfehler zu erkennen, werden auch hier über das jeweilige Bussystem die Ergebnisse der Steuergerätdiagnose an das Diagnosesteuergerät 25 übermittelt, und mit Hilfe der systemübergreifenden, modellbasierten Diagnose und gegebenenfalls weiteren internen oder externen Daten, z. B. weiteren Symptominformationen, Systemfehlerkandidaten ermittelt.

Denkbar sind auch Mischformen der Ausführungsbeispiele gemäß Fig. 1 und Fig. 2.

## Patentansprüche

1. Vorrichtung zur On-Board-Diagnose eines Fahrzeugsystems, insbesondere eines Kraftfahrzeugsystems, das mehrere, miteinander vernetzte, funktionale Komponenten (11 bis 14, 21 bis 24), von denen mindestens zwei Steuergeräte sind, aufweist, mit
einer Recheneinrichtung (15, 25), die über eine Anschlusseinrichtung (I, II) mit den mehreren funktionalen Komponenten (11 bis 14, 21 bis 24) verbindbar ist, zur Aufnahme und Auswertung von Komponentendaten der mehreren Komponenten,
**dadurch gekennzeichnet, dass**
die Recheneinrichtung (15, 25) über ein mathematisches Modell verfügt, mit dem funktionale Zusammenhänge der mehreren Komponenten (11 bis 14, 21 bis 24) optional einschließlich der Anschlusseinrichtung (I, II) berechenbar sind, so dass aus den Komponentendaten komponentenübergreifende Fehler und/oder Fehler betreffend die Anschlusseinrichtung (I, II) zielgerichtet im Fahrzeug ermittelbar sind.

2. Vorrichtung nach Anspruch 1, die für sämtliche der mehreren Komponenten des Fahrzeugsystems einschließlich der Anschlusseinrichtung (I, II) zentral für die Fehlerdiagnose einsetzbar ist.

3. Vorrichtung nach Anspruch 1 oder 2, wobei die Komponentendaten von den mehreren Komponenten (11 bis 14, 21 bis 24) hinsichtlich der Fehlerdiagnose unverarbeitete Zustandsdaten umfassen.

4. Vorrichtung nach einem der Ansprüche 1 bis 3, wobei die Komponentendaten von den mehreren Komponenten (11 bis 14, 21 bis 24) hinsichtlich der Fehlerdiagnose vorverarbeitete Zustandsdaten oder Fehlerdaten umfassen.

5. Vorrichtung nach einem der Ansprüche 1 bis 4, die eine Funktionseinrichtung zur Durchführung einer Fahrzeugfunktion aufweist.

6. Fahrzeugsystem mit mehreren, miteinander vernetzten, funktionalen Komponenten (11 bis 14, 21 bis 24) einschließlich einer Anschlusseinrichtung (I, II) und mindestens einer Vorrichtung nach einem der Ansprüche 1 und 3 bis 5.

7. Fahrzeugsystem nach Anspruch 6, wobei mit mindestens einer der mehreren Komponenten (21 bis 24) eine modellbasierte Eigendiagnose durchführbar ist.

8. Verfahren zur On-Board-Diagnose eines Fahrzeugsystems, insbesondere eines Kraftfahrzeugsystems, das mehrere, miteinander vernetzte, funktionale Komponenten (11 bis 14, 21 bis 24) aufweist, durch
Aufnehmen und Auswertung von Komponentendaten der mehreren Komponenten,
**dadurch gekennzeichnet, dass**
zum Auswerten der Komponentendaten ein mathematisches Modell verwendet wird, mit dem funktionelle Zusammenhänge der mehreren Komponenten (11 bis 14, 21 bis 24) optional einschließlich einer Anschlusseinrichtung (I, II) zur Vernetzung der Komponenten berechnet werden, so dass aus den Komponentendaten komponentenübergreifende Fehler und/oder Fehler betreffend die Anschlusseinrichtung (I, II) zielgerichtet im Fahrzeug ermittelbar sind.

9. Verfahren nach Anspruch 8, wobei für sämtliche der mehreren Komponenten (11 bis 14, 21 bis 24) die Fehlerdiagnose zentral durchgeführt wird.

10. Verfahren nach Anspruch 8 oder 9, wobei die Komponentendaten von den mehreren Komponenten (11 bis 14, 21 bis 24) hinsichtlich der Fehlerdiagnose unbearbeitete Zustandsdaten umfassen.

11. Verfahren nach einem der Ansprüche 8 bis 10, wobei die Komponentendaten von den mehreren Komponenten (11 bis 14, 21 bis 24) hinsichtlich der Fehlerdiagnose vorverarbeitete Zustandsdaten oder Fehlerdaten umfassen.

12. Verfahren nach einem der Ansprüche 8 bis 11, wobei eine komponentenübergreifende modellbasierte Diagnose in mindestens zwei der mehreren Komponenten durchgeführt wird.

13. Verfahren nach einem der Ansprüche 8 bis 12, wobei in mindesten einer der mehreren Komponenten (21 bis 24) eine modellbasierte Eigendiagnose durchgeführt wird.

## Claims

1. Device for on-board diagnosis of a vehicle system, in particular a motor vehicle system, which comprises a plurality of functional components (11 to 14, 21 to 24) networked together, at least two of which are control units, with
a computing device (15, 25) which is connectable via a connection device (I, II) to the plurality of functional components (11 to 14, 21 to 24) for receiving and evaluating component data of the plurality of components,
**characterised in that**
the computing device (15, 25) has available a mathematical model with which functional interrelationships of the plurality of components (11 to 14, 21 to 24), optionally including the connection device (I, II), can be calculated, so that faults spanning more than one component and/or faults relating to the connection device (I, II) can be determined from the component data in a targeted manner in the vehicle.

2. Device according to Claim 1, which can be used centrally for the fault diagnosis for all of the plurality of components of the vehicle system, including the connection device (I, II).

3. Device according to Claim 1 or 2, wherein the component data of the plurality of components (11 to 14, 21 to 24) includes state data which has not been processed in relation to the fault diagnosis.

4. Device according to any one of Claims 1 to 3, wherein the component data of the plurality of components (11 to 14, 21 to 24) includes state data or fault data which has been preprocessed in relation to the fault diagnosis.

5. Device according to any one of Claims 1 to 4, which has a function device for executing a vehicle function.

6. Vehicle system with a plurality of functional components (11 to 14, 21 to 24) networked together, including a connection device (I, II) and at least one device according to Claims 1 and 3 to 5.

7. Vehicle system according to Claim 6, wherein a model-based self-diagnosis can be carried out with at least one of the plurality of components (21 to 24).

8. Method for on-board diagnosis of a vehicle system, in particular a motor vehicle system, which has a plurality of functional components (11 to 14, 21 to 24) networked together, by
receiving and evaluating component data of the plurality of components,
**characterised in that**
a mathematical model is used for evaluating the component data, with which mathematical model functional interrelationships of the plurality of components (11 to 14, 21 to 24), optionally including a connection device (I, II), are calculated for networking the components, so that faults spanning more than one component and/or faults relating to the connection device (I, II) can be determined from the component data in a targeted manner in the vehicle.

9. Method according to Claim 8, wherein the fault diagnosis is carried out centrally for all of the plurality of components (11 to 14, 21 to 24).

10. Method according to Claim 8 or 9, wherein the component data of the plurality of components (11 to 14, 21 to 24) includes state data which has not been processed in relation to the fault diagnosis.

11. Method according to any one of Claims 8 to 10, wherein the component data of the plurality of components (11 to 14, 21 to 24) includes state data or fault data which has been preprocessed in relation to the fault diagnosis.

12. Method according to any one of Claims 8 to 11, wherein a model-based diagnosis spanning more than one component is carried out in at least two of the plurality of components.

13. Method according to any one of Claims 8 to 12, wherein a model--based self-diagnosis is carried out in at least one of the plurality of components (21 to 24).

## Revendications

1. Dispositif de diagnostic embarqué d'un système de véhicule, en particulier d'un système de véhicule automobile, qui comporte plusieurs composants fonctionnels (11 à 14, 21 à 24) interconnectés dans un réseau, dont deux au moins sont des appareils de commande, ayant
un dispositif de calcul (15, 25), qui peut être relié aux dits plusieurs composants fonctionnels (11 à 14, 21 à 24) par un dispositif de raccordement (I, II), destiné à recevoir et évaluer des données de composant provenant desdits plusieurs composants,
**caractérisé en ce que**
le dispositif de calcul (15, 25) dispose d'un modèle mathématique avec lequel des relations fonctionnelles desdits plusieurs composants (11 à 14, 21 à 24), en option y compris du dispositif de raccordement (I, II), peuvent être calculées de sorte que des erreurs concernant les composants et/ou des erreurs concernant le dispositif de raccordement (I, II) puissent être détectées précisément dans le véhicule à partir des données de composant.

2. Dispositif selon la revendication 1, qui peut être mis en oeuvre de manière centrale à des fins de diagnostic d'erreur pour tous lesdits plusieurs composants du système de véhicule y compris du dispositif de raccordement (I, II).

3. Dispositif selon la revendication 1 ou 2, dans lequel les données de composant desdits plusieurs composants (11 à 14, 21 à 24) contiennent des données d'état non traitées en ce qui concerne le diagnostic d'erreur.

4. Dispositif selon une des revendications 1 à 3, dans lequel les données de composant desdits plusieurs composants (11 à 14, 21 à 24) contiennent des données d'erreur ou des données d'état prétraitées en ce qui concerne le diagnostic d'erreur.

5. Dispositif selon une des revendications 1 à 4, lequel comporte un dispositif fonctionnel pour effectuer une fonction de véhicule.

6. Système de véhicule ayant plusieurs composants fonctionnels (11 à 14, 21 à 24) interconnectés dans un réseau, y compris un dispositif de raccordement (I, II) et au moins un dispositif selon l'une quelconque des revendications 1 et 3 à 5.

7. Système de véhicule selon la revendication 6, dans lequel un autodiagnostic basé sur un modèle peut être exécuté avec au moins un desdits plusieurs composants (21 à 24).

8. Procédé de diagnostic embarqué d'un système de véhicule, en particulier d'un système de véhicule automobile, qui comporte plusieurs composants fonctionnels (11 à 14, 21 à 24) interconnectés dans un réseau, au moyen
d'un enregistrement et d'une évaluation des données de composant desdits plusieurs composants,
**caractérisé en ce que,**
pour évaluer les données des composants, il est employé un modèle mathématique avec lequel des relations fonctionnelles desdits plusieurs composants (11 à 14, 21 à 24) en option y compris d'un dispositif de raccordement (I, II) pour la mise en réseau des composants sont calculées de sorte que des erreurs concernant les composants et/ou des erreurs concernant le dispositif de raccordement (I, II) puissent être détectées précisément dans le véhicule à partir des données des composants.

9. Procédé selon la revendication 8, dans lequel le diagnostic d'erreur est exécuté de manière centrale pour tous lesdits plusieurs composants (11 à 14, 21 à 24).

10. Procédé selon la revendication 8 ou 9, dans lequel les données des composants desdits plusieurs composants (11 à 14, 21 à 24) comportent des données d'état non traitées en ce qui concerne le diagnostic d'erreur.

11. Procédé selon une des revendications 8 à 10, dans lequel les données des composants desdits plusieurs composants (11 à 14, 21 à 24) comportent des données d'erreur et des données d'état prétraitées en ce qui concerne le diagnostic d'erreur.

12. Procédé selon une des revendications 8 à 11, dans lequel un diagnostic, basé sur un modèle, portant sur tous les composants est exécuté dans au moins deux desdits plusieurs composants.

13. Procédé selon une des revendications 8 à 12, dans lequel un autodiagnostic basé sur un modèle est exécuté dans au moins un desdits plusieurs composants (21 à 24).
